(19)

Europäisches
Patentamt
European
Patent Office
Office européen
des brevets

(11) **EP 4 550 851 A1**

(12) **EUROPEAN PATENT APPLICATION**
published in accordance with Art. 153(4) EPC

(43) Date of publication:
**07.05.2025 Bulletin 2025/19**

(21) Application number: **23870957.0**

(22) Date of filing: **27.09.2023**

(51) International Patent Classification (IPC):
**H04W 4/02** (2018.01)

(52) Cooperative Patent Classification (CPC):
**G01S 5/02; H04W 4/02; H04W 4/029; H04W 64/00**

(86) International application number:
**PCT/CN2023/122171**

(87) International publication number:
**WO 2024/067730 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022   CN 202211200786**

(71) Applicant: **ZTE Corporation
Shenzhen, Guangdong  518057 (CN)**

(72) Inventors:
• **CHEN, Shijun
  Shenzhen, Guangdong 518057 (CN)**

• **CHEN, Dawei
  Shenzhen, Guangdong 518057 (CN)**
• **LI, Junqiang
  Shenzhen, Guangdong 518057 (CN)**
• **ZHANG, Haojian
  Shenzhen, Guangdong 518057 (CN)**
• **XIA, Shuqiang
  Shenzhen, Guangdong 518057 (CN)**

(74) Representative: **Canzler & Bergmeier
Patentanwälte
Partnerschaft mbB
Despag-Straße 6
85055 Ingolstadt (DE)**

(54) **MULTI-TARGET POSITION CLASSIFICATION WIRELESS SENSING METHOD, DEVICE, AND MEDIUM**

(57)    The present disclosure provides a multi-target position classification wireless sensing method. The method comprises: determining a channel impulse response of a received sensing signal of each antenna element in a multi-antenna array; according to the channel impulse response of the received sensing signal on each antenna element, calculating an angle of delay/angle of arrival (AoD/AoA) spectrum; according to the AoD/AoA spectrum, dividing and classifying a path distribution area; when the path distribution area contains a separable path, taking as the angle of arrival of the separable path an angle corresponding to the maximum amplitude point in the fuzzy range of the separable path, and taking as the time of arrival a time corresponding to the maximum amplitude point in the fuzzy range; and when the path distribution area contains a non-separable path, then according to an angle fuzzy range and a time delay fuzzy range of a graph comprising the non-separable path, estimating the angle of arrival and the time of arrival of each non-separable path in the non-separable-path graph. The present disclosure further provides an electronic device and a computer readable medium.

FIG. 2

**Description**

TECHNICAL FIELD

The present disclosure relates to the technical field of communications, and in particular, to a multi-target position classification wireless sensing method, an electronic device, and a computer readable medium.

BACKGROUND

Ubiquitous intelligent technology mainly includes ubiquitous sensing technology, ubiquitous computing technology, and product research and development methods, for example. Wireless communication networks can satisfy ubiquity, so that the use of the communication networks to realize ubiquitous sensing and ubiquitous computing becomes a development trend.

Time Of Arrival (TOA) and Angle Of Arrival (AOA) of a sensing signal determine a sensing error, and mobile base stations are usually deployed in complex multipath environments, so how to improve measurement accuracy of the TOA and the AOA in the complex environments becomes an urgent technical problem to be solved in the art.

SUMMARY

Embodiments of the present disclosure provide a multi-target position classification wireless sensing method, an electronic device, and a computer readable medium.

In a first aspect of the present disclosure, there is provided a multi-target position classification wireless sensing method, including: determining a channel impulse response of each antenna oscillator in a multi-antenna array in receiving a sensing signal; calculating a delay-angle of arrival spectrum according to the channel impulse response of each antenna oscillator in receiving the sensing signal; dividing and classifying a path distribution area according to the delay-angle of arrival spectrum; in presence of a separable path in the path distribution area, taking an angle corresponding to a maximum amplitude point in an ambiguity range of the separable path as an angle of arrival of the separable path, and taking time corresponding to the maximum amplitude point in the ambiguity range of the separable path as time of arrival of the separable path; and in presence of an inseparable path in the path distribution area, according to an angle ambiguity range and a delay ambiguity range of a graph including the inseparable paths, estimating an angle of arrival and time of arrival of each inseparable path in the graph of the inseparable paths.

In a second aspect of the present disclosure, there is provided an electronic device, including: one or more processors; and a storage device having stored thereon one or more programs which, when executed by the one or more processors, cause the one or more processors to implement the multi-target position classification wireless sensing method described in the first aspect of the present disclosure.

Optionally, the electronic device includes a multi-antenna receiver including a multi-antenna array, and each antenna oscillator of the multi-antenna array is configured to receive the sensing signal.

In a third aspect of the present disclosure, there is provided a computer readable medium having stored thereon a computer program which, when executed by a processor, implements the multi-target position classification wireless sensing method described in the first aspect of the present disclosure.

In the multi-target position classification wireless sensing method provided in the embodiment of the present disclosure, by calculating the delay-angle of arrival spectrum, combination of spatial-domain orthogonality and time-domain orthogonality is realized, and calculation of the AOA and calculation of the TOA are converted into graphic processing, so that arrival parameters of the sensing signal can be determined simply and accurately.

BRIEF DESCRIPTION OF DRAWINGS

FIG. 1 is a schematic diagram of an applicable scenario of a multi-target position classification wireless sensing method according to the present disclosure;
FIG. 2 is a schematic diagram illustrating an implementation of a multi-target position classification wireless sensing method according to the present disclosure;
FIG. 3 is a schematic diagram of an antenna array;
FIG. 4 is a schematic diagram illustrating an implementation of operation S130;
FIG. 5 is a schematic diagram illustrating an implementation of operation S121;
FIG. 6 is a schematic diagram of a delay-angle of arrival spectrum;
FIG. 7 is a schematic diagram of a path distribution area in a delay-angle of arrival spectrum;

FIG. 8 is a schematic diagram of separable paths and inseparable paths in a path distribution area in a delay-angle of arrival spectrum;
FIG. 9 is a schematic diagram illustrating derivative singularities in inseparable paths;
FIG. 10 is a schematic diagram illustrating an implementation of an electronic device according to the present disclosure; and
FIG. 11 is a schematic diagram of a computer readable medium according to the present disclosure.

DETAIL DESCRIPTION OF EMBODIMENTS

In order to enable those of ordinary skill in the art to better understand the technical solutions of the present disclosure, a multi-target position classification wireless sensing method, an electronic device, and a computer readable medium provided by the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In the present disclosure, a sensing signal is transmitted from a sensing-signal-transmitting base station BS1. In an alternative implementation, the sensing-signal-transmitting base station transmits an initial sensing signal at set time TN using radio resources. The radio resources are not particularly limited in the present disclosure. For example, the radio resources may be selected from at least one of the following resources:

time-domain resources and frequency-domain resources, which are allocated in unit of symbol;
time-domain resources and frequency-domain resources, which are allocated in unit of subcarrier; or
time-domain resources and frequency-domain resources, which are allocated in unit of frame.

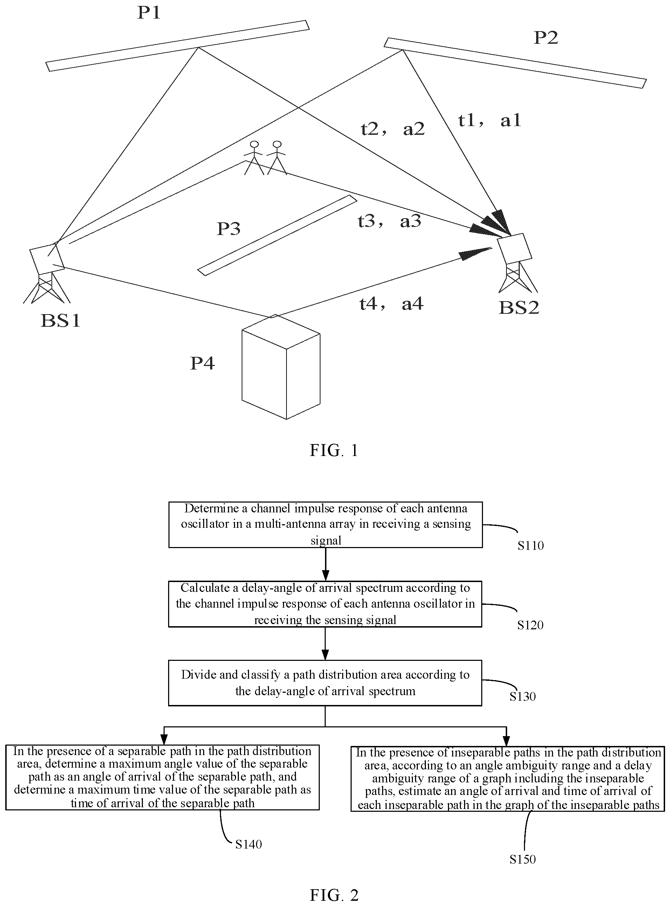

The initial sensing signal transmitted from the sensing-signal-transmitting base station BS1 develops into multiple paths due to the multipath effect. In an exemplary scenario shown in FIG. 1, the initial sensing signal develops into a signal (t1, a1), a signal (t2, a2), a signal (t3, a3), and a signal (t4, a4) according to different angles of arrival and delays.

Several obstacles exist in the environment where the base station is deployed, and FIG. 1 shows walls P1, P2, P3, a building P4, and the people for illustration.

During transmission processes of the multipath signals, the signals are blocked by the obstacles such that transmission directions of the signals are changed, and finally the signals are received by a sensing-signal-receiving base station BS2.

In a first aspect of the present disclosure, there is provided a multi-target position classification wireless sensing method. As shown in FIG. 2, the multi-target position classification wireless sensing method includes:

operation S110, determining a channel impulse response of each antenna in a multi-antenna array in receiving a sensing signal;
operation S120, calculating a delay-angle of arrival spectrum $\tau$-$\theta$ according to the channel impulse response of each antenna oscillator in receiving the sensing signal;
operation S130, dividing and classifying a path distribution area according to the delay-angle of arrival spectrum $\tau$-$\theta$;
operation S140, in presence of a separable path in the path distribution area, taking an angle corresponding to a maximum amplitude point in an ambiguity range of the separable path as an angle of arrival of the separable path, and taking time corresponding to the maximum amplitude point in the ambiguity range of the separable path as time of arrival of the separable path; and

operation S150, in presence of an inseparable path in the path distribution area, according to an angle ambiguity range and a delay ambiguity range of a graph including the inseparable paths, estimating an angle of arrival and time of arrival of each inseparable path in the graph of the inseparable paths.

The method provided herein is particularly applicable to complex environments.

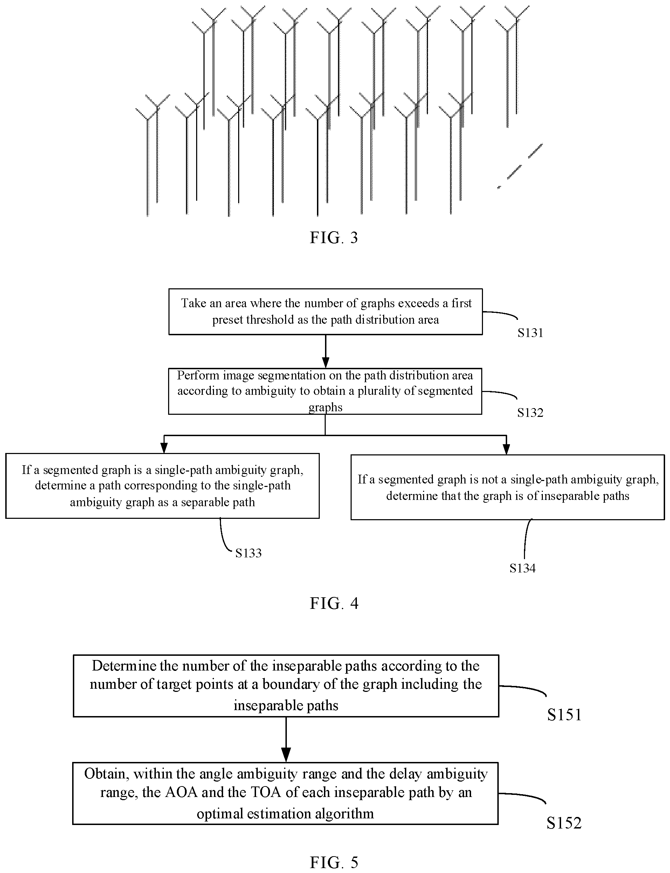

The above "multi-antenna array" belongs to the sensing-signal-receiving base station, and the sensing signals received by the multi-antenna array are the signals derived after the above initial sensing signal is subjected to the multipath effect. As shown in FIG. 3, the multi-antenna array includes a plurality of antenna oscillators.

In order to determine the path distribution area in the delay-angle of arrival spectrum, signal sampling needs to be performed on each antenna oscillator, the channel impulse response of each antenna in receiving the sensing signal may be obtained by calculation using a sampling value of each sampling point, and the delay-angle of arrival spectrum may be further obtained by calculation. The path distribution area may be divided and classified according to the delay-angle of arrival spectrum. The number of sampling points on each antenna oscillator is not particularly limited in the present disclosure. In order to determine the delay-angle of arrival spectrum more accurately, optionally, a plurality of sampling points may be set on each antenna oscillator.

Here, the delay-angle of arrival spectrum is equivalent to a coordinate space with delays as abscissas and angles of arrival as ordinates. The "path distribution area" refers to a distribution area of each path in the coordinate space, and each path in the path distribution area is equivalent to a function which is obtained by calculation and fitting according to the channel impulse response of each antenna oscillator in receiving the sensing signal, and represents the received sensing signal with a delay and an angle of arrival.

In the delay-angle of arrival spectrum, if AOAs of every two paths among a plurality of paths differ greatly, an interval between every two paths is relatively large in the delay-angle of arrival spectrum, so every two paths are equivalent to two paths independent of each other in the coordinate space. If AOAs of every two paths among a plurality of paths differ slightly, an interval between every two path is relatively small or some paths may even overlap each other, so the plurality of paths are inseparable paths.

It should be noted that the separable path is a graph in the delay-angle of arrival spectrum, the angle (i.e., an ordinate value) corresponding to the maximum amplitude point in the ambiguity range of the separable path is the AOA of the separable path, and the time (i.e., an abscissa value) corresponding to the maximum amplitude point in the ambiguity range of the separable path is the TOA of the separable path.

The inseparable paths are also a graph in the delay-angle of arrival spectrum, the inseparable paths include a plurality of paths, and the AOA and the TOA of each inseparable path in the graph of the inseparable paths may be estimated according to the angle ambiguity range and the delay ambiguity range of the graph.

As can be seen, in the multi-target position classification wireless sensing method according to the embodiment of the present disclosure, the calculation of the delay-angle of arrival spectrum can realize the combination of spatial-domain orthogonality and time-domain orthogonality to convert the calculation of the AOA and the calculation of the TOA into a graphic processing, thereby simply and accurately determining the arrival parameters of the sensing signal.

The execution of operation S120 is not particularly limited in the present disclosure. Optionally, operation S120 may specifically include:

for each Rm vector, traversing $\theta \in (-\pi,\pi)$ with a step $\delta$, and calculating an inner product of a vector (R0,R1,...,RM-1) and a vector $(\alpha(\theta,0),\alpha(\theta,1),...,\alpha(\theta,M-1))$ as a vector value of the delay-angle of arrival spectrum at $\theta$, where $\theta \in (-\pi, \pi)$.

Rm denotes the channel impulse response vector of the $m^{th}$ antenna oscillator;

$\alpha(\cdot)$ denotes a beamforming function, that is, each of $\alpha(\theta,0)$, $\alpha(\theta,1)$, ... , $\alpha(\theta,M-1)$ denotes a beamforming function; and m denotes a serial number of an antenna oscillator in the antenna array.

In the present disclosure, Rm may be used to denote the channel impulse response of the $m^{th}$ antenna oscillator in receiving the sensing signal. That is, m is the serial number of the antenna oscillator, and takes a value from 0 to M-1, where M is the total number of the antenna oscillators in the antenna array.

A specific value of the step $\delta$ is not particularly limited in the present disclosure, and may be determined according to an actual application scenario.

Correspondingly, as shown in FIG. 4, operation S130 may specifically include:

operation S131, taking an area where the number of graphs exceeds a first preset threshold as the path distribution area;

operation S132, performing image segmentation on the path distribution area according to ambiguity to obtain a plurality of segmented graphs;

operation S133, if a segmented graph is a single-path ambiguity graph, determining a path corresponding to the single-path ambiguity graph as a separable path; and

operation S134, if a segmented graph is not a single-path ambiguity graph, determining that the graph is of inseparable paths.

The first preset threshold is not particularly limited in the present disclosure. For example, the first preset threshold may be 1, and accordingly, if one area includes two or more graphs, the area may be determined as the "path distribution area". Certainly, the present disclosure is not limited thereto, and a specific value of the first preset threshold may be determined according to an actual application scenario.

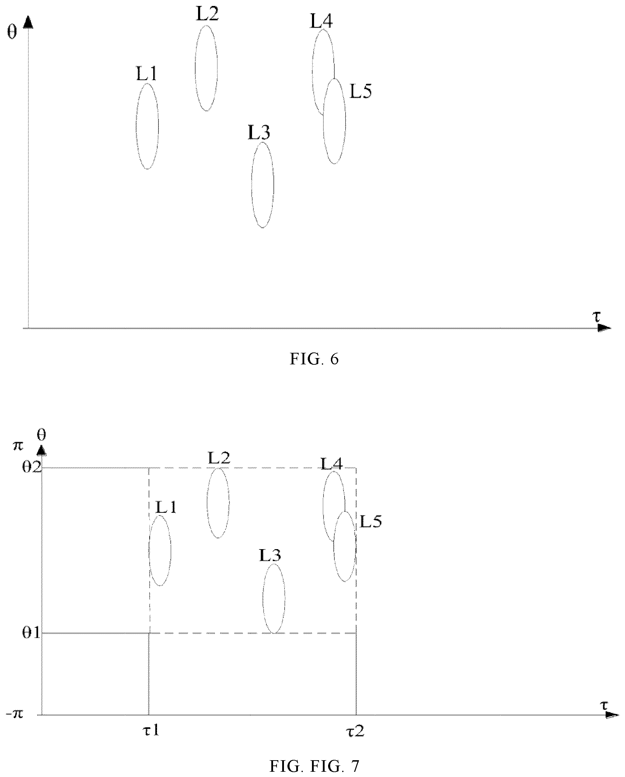

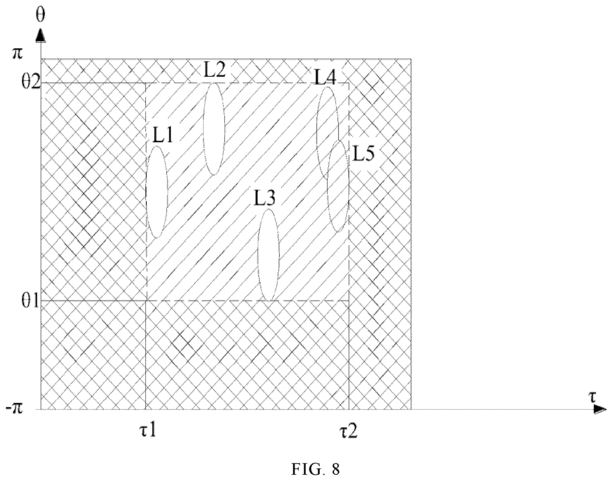

In an alternative implementation, the path distribution area is in a shape of a rectangle, and the number of graphs within the rectangle exceeds the first preset threshold. For convenience of description, as shown in FIG. 7, coordinates of the four vertices of the rectangle may be denoted by $(\tau 1, \theta 1)$, $(\tau 1, \theta 2)$, $(\tau 2, \theta 1)$, and $(\tau 2, \theta 2)$. In the exemplary embodiments illustrated by FIG. 6 to FIG. 8, separable paths L1, L2 and inseparable paths L4, L5 are obtained through segmentation.

Operation S150 is not particularly limited in the present disclosure. Specifically, as shown in FIG. 5, operation S150 may include:

operation S151, determining the number of the inseparable paths according to the number of target points at a boundary of the graph including the inseparable paths, with the target points being points derivatives of which cannot be obtained or points derivatives of which exceed a second preset threshold; and

operation S152, within the angle ambiguity range and the delay ambiguity range, obtaining the AOA and the TOA of each inseparable path by an optimal estimation algorithm.

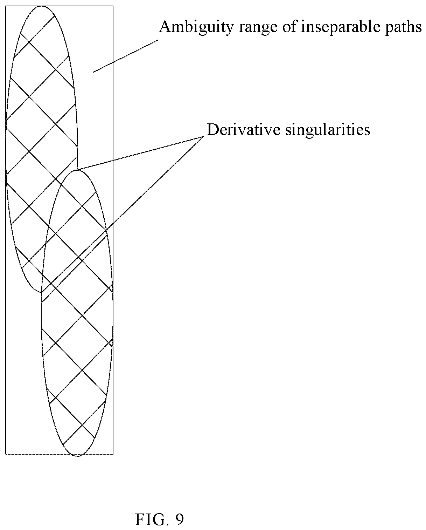

As shown in FIG. 9, the target points are derivative singularities. In the present disclosure, the second preset threshold may be 1, so if a point having a derivative greater than 1 exists at the boundary of the graph including the inseparable paths, the point is an intersection of boundaries of two paths.

In the present disclosure, the number of the target points is necessarily an even number, and may be denoted by Q, and the number of the inseparable paths may be denoted by C, then C = Q/2.

Optionally, the optimal estimation algorithm includes a maximum likelihood estimation algorithm and/or a mathematical analytic equation algorithm.

Optionally, the sensing signal includes an Orthogonal Frequency Division Multiplexing (OFDM) signal or a Linear Frequency Modulation (LFM) signal.

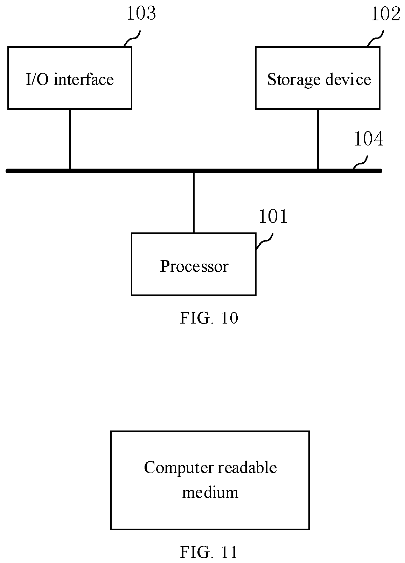

In a second aspect of the present disclosure, there is provided an electronic device. As shown in FIG. 10, the electronic device includes:

one or more processors 101; and

a storage device 102 having stored thereon one or more programs which, when executed by the one or more processors, cause the one or more processors to implement the multi-target position classification wireless sensing method provided in the first aspect of the present disclosure.

Optionally, the electronic device may further include one or more input/output (I/O) interfaces 103 connected between the one or more processors and the storage device and configured to enable information interaction between the one or more processors and the storage device.

The processor 101 is a device having data processing capability, and includes, but is not limited to, a Central Processing Unit (CPU); the storage device 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the storage device 102, is capable of enabling the information interaction between the processor 101 and the storage device 102, and includes, but is not limited to, a data bus (Bus).

In some embodiments, the processor 101, the storage device 102, and the I/O interface 103 are connected to each other through a bus 104, and then are connected to other components of a computing device.

The electronic device may be a base station. Accordingly, the electronic device includes a multi-antenna receiver including a multi-antenna array, and each antenna oscillator of the multi-antenna array is configured to receive the sensing signal.

In a third aspect of the present disclosure, as shown in FIG. 11, there is provided a computer readable medium having stored thereon a computer program which, when executed by a processor, implements the multi-target position classification wireless sensing method provided in the first aspect of the present disclosure.

Exemplary Embodiments

Embodiment One

This embodiment illustrates a scenario of calculation of arrival parameters of two paths having a large time-of-arrival interval $\Delta\tau$ and a large angle-of-arrival difference $\Delta\alpha$.

The sensing-signal-transmitting base station sends a sensing signal which is an LFM signal.

At the side of the sensing-signal-receiving base station, a receiving antenna array includes 8*4 antenna oscillators, and a sampling time interval is Ts. Two paths exist in the environment, with $\Delta\tau$ of 3Ts and $\Delta\alpha$=20 degrees.

At the side of the sensing-signal-receiving base station, the channel impulse responses are calculated. The channel impulse response Rm = ifft(fft(S). * fft(Rx(m))) of each antenna oscillator in receiving the sensing signal is calculated according to transmitted data and received data, where m $\in$ [1,32].

At the side of the sensing-signal-receiving base station, a delay-angle of arrival spectrum $\tau$-$\theta$ spectrum F is determined. The values at (m, $\theta$) in the $\tau$-$\theta$ spectrum are determined by the following formula:

$$F\tau\text{-}\theta = (R0, R1, ..., R(M\text{-}1)) \cdot (\alpha(\theta,0), \alpha(\theta,1), ..., \alpha(\theta,M\text{-}1))$$

At the side of the sensing-signal-receiving base station, a multi-path distribution area is determined as follows: determining a minimum rectangle having element values exceeding a threshold of 1 in the $\tau$-$\theta$ spectrum, with the rectangle consisting of four points $(\tau1, \theta1)$, $(\tau1, \theta2)$, $(\tau2, \theta1)$, and $(\tau2, \theta2)$. The path distribution area is subjected to image segmentation. Since the time-of-arrival interval and the angle-of-arrival difference of the two paths are both large, merely separable paths exist.

Each angle of arrival and each time of arrival are determined.

Two angles and two times of arrival corresponding to the maximum value in the segmented graph are taken as the AOAs and the TOAs of the two paths, respectively.

Embodiment Two

This embodiment illustrates a scenario of calculation of arrival parameters of two paths having a small time-of-arrival interval $\Delta\tau$ and a large angle-of-arrival difference $\Delta\alpha$.

The sensing-signal-transmitting base station sends a sensing signal which is an LFM signal.

At the side of the sensing-signal-receiving base station, a receiving antenna array includes 8*4 antenna oscillators, and a sampling time interval is Ts. Two paths exist in the environment, with $\Delta\tau$=0.5Ts and $\Delta\alpha$=20 degrees.

The channel impulse responses are calculated. The channel impulse response Rm = ifft(fft(S). * fft(Rx(m))) of each antenna oscillator in receiving the sensing signal is calculated according to transmitted data and received data, where m $\in$ [1,32].

A delay-angle of arrival spectrum $\tau$-$\theta$ spectrum F is determined. The values at (j, $\theta$) in the $\tau$-$\theta$ spectrum are determined by the following formula:

$$F\tau\text{-}\theta = (R0, R1, ..., R(M\text{-}1)) \cdot (\alpha(\theta,0), \alpha(\theta,1), ..., \alpha(\theta,M\text{-}1))$$

A multi-path distribution area is determined as follows: determining a minimum rectangle having element values exceeding a threshold of 1 in the $\tau$-$\theta$ spectrum, with the rectangle consisting of four points $(\tau1, \theta1)$, $(\tau1, \theta2)$, $(\tau2, \theta1)$, and $(\tau2, \theta2)$. The path distribution area is subjected to image segmentation. Since $\Delta\alpha$ of the two paths is large, merely separable paths exist in spite of small $\Delta\tau$ of the two paths.

Each angle of arrival and each time of arrival are determined.

Two angles and two times of arrival corresponding to the maximum value in the segmented graph are respectively taken as the AOAs and the TOAs of the two paths.

Embodiment Three

This embodiment illustrates a scenario of calculation of arrival parameters of two paths having a large time-of-arrival interval $\Delta\tau$ and a small angle-of-arrival difference $\Delta\alpha$.

The sensing-signal-transmitting base station sends a sensing signal. An LFM signal is adopted as the sensing signal when sending the sensing signal.

At the side of the sensing-signal-receiving base station, a receiving antenna array includes 8*4 antenna oscillators, and a sampling time interval is Ts. Two paths exist in the environment, with $\Delta\tau$=3Ts and $\Delta\alpha$=5 degrees.

The channel impulse responses are calculated. The channel impulse response Rm = ifft(fft(S). * fft(Rx(m))) of each antenna oscillator in receiving the sensing signal is calculated according to transmitted data and received data, where m ∈ [1,32].

A delay-angle of arrival spectrum τ-θ spectrum F is determined. The values at (m, θ) in the τ-θ spectrum are determined by the following formula:

$$F\tau\text{-}\theta = (R0, R1, ..., R(M\text{-}1)) \cdot (\alpha(\theta,0), \alpha(\theta,1), ..., \alpha(\theta, M\text{-}1))$$

A multi-path distribution area is determined as follows: determining a minimum rectangle having element values exceeding a threshold of 1 in the τ-θ spectrum, with the rectangle consisting of four points (τ1, θ1), (τ1, θ2), (τ2, θ1), and (τ2, θ2). The path distribution area is subjected to image segmentation. Since Δτ of the two paths is large, merely separable paths exist in spite of small Δα of the two paths.

Each angle of arrival and each time of arrival are determined.

Two angles and two times of arrival corresponding to the maximum value in the segmented graph are respectively taken as the AOAs and the TOAs of the two paths.

Embodiment Four

This embodiment illustrates a scenario of calculation of arrival parameters of two paths having a small time-of-arrival interval Δτ and a small angle-of-arrival difference Δα.

The sensing-signal-transmitting base station sends a sensing signal. An LFM signal is adopted as the sensing signal when sending the sensing signal.

At the side of the sensing-signal-receiving base station, a receiving antenna array includes 8*4 antenna oscillators, and a sampling time interval is Ts. Two paths exist in the environment, with Δτ=0.5Ts and Δα=5 degrees.

The channel impulse responses are calculated. The channel impulse response Rm = ifft(fft(S). * fft(Rx(m))) of each antenna oscillator in receiving the sensing signal is calculated according to transmitted data and received data, where m ∈ [1,32].

At the side of the sensing-signal-receiving base station, a delay-angle of arrival spectrum τ-θ spectrum F is determined. The values at (m, θ) in the τ-θ spectrum are determined by the following formula:

$$F\tau\text{-}\theta = (R0, R1, ..., R(M\text{-}1)) \cdot (\alpha(\theta,0), \alpha(\theta,1), ..., \alpha(\theta, M\text{-}1))$$

A multi-path distribution area is determined as follows: determining a minimum rectangle having element values exceeding a threshold of 1 in the τ-θ spectrum, with the rectangle consisting of four points (τ1, θ1), (τ1, θ2), (τ2, θ1), and (τ2, θ2). The path distribution area is subjected to image segmentation. Since Δτ and Δα of the two paths are both small, the two paths cannot be separated in the τ-θ spectrum.

Each angle of arrival and each time of arrival are determined.

The AOAs, the TOAs, and the amplitude values of the two paths are obtained by a maximum likelihood estimation algorithm.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

**Claims**

1. A multi-target position classification wireless sensing method, comprising:

   determining a channel impulse response of each antenna oscillator in a multi-antenna array in receiving a sensing signal;

   calculating a delay-angle of arrival spectrum according to the channel impulse response of each antenna oscillator in receiving the sensing signal;

   dividing and classifying a path distribution area according to the delay-angle of arrival spectrum;

   in presence of a separable path in the path distribution area, taking an angle corresponding to a maximum amplitude point in an ambiguity range of the separable path as an angle of arrival of the separable path, and taking time corresponding to the maximum amplitude point in the ambiguity range of the separable path as time of arrival of the separable path; and

   in presence of an inseparable path in the path distribution area, according to an angle ambiguity range and a delay ambiguity range of a graph comprising the inseparable paths, estimating an angle of arrival and time of arrival of each inseparable path in the graph of the inseparable paths.

2. The method of claim 1, wherein calculating the delay-angle of arrival spectrum according to the channel impulse response of each antenna oscillator in receiving the sensing signal comprises:

   for each Rm vector, traversing $\theta \in (-\pi, \pi)$ with a step $\delta$, and calculating an inner product of a vector $(R0, R1, ..., RM-1)$ and a vector $(\alpha(\theta,0), \alpha(\theta,1), ..., \alpha(\theta,M-1))$ as a vector value of the delay-angle of arrival spectrum at $\theta$, where $\theta \in (-\pi, \pi)$;

   wherein Rm denotes the channel impulse response vector of the $m^{th}$ antenna oscillator in receiving the sensing signal;

   $\alpha(\cdot)$ is a beamforming function; and

   m denotes a serial number of an antenna oscillator in the multi-antenna array.

3. The method of claim 2, wherein dividing and classifying the path distribution area according to the delay-angle of arrival spectrum comprises:

   taking an area where the number of graphs exceeds a first preset threshold as the path distribution area;

   performing image segmentation on the path distribution area according to ambiguity to obtain a plurality of segmented graphs;

   responsive to determining that a segmented graph is a single-path ambiguity graph, determining a path corresponding to the single-path ambiguity graph as a separable path; and

   responsive to determining that the segmented graph is not the single-path ambiguity graph, determining that the graph is of the inseparable paths.

4. The method of claim 3, wherein estimating the angle of arrival and the time of arrival of each inseparable path in the graph of the inseparable paths according to the angle ambiguity range and the delay ambiguity range of the graph comprising the inseparable paths comprises:

   determining the number of the inseparable paths according to the number of target points at a boundary of the graph comprising the inseparable paths, wherein the target points are points derivatives of which cannot be obtained or points derivatives of which exceed a second preset threshold; and

   obtaining, within the angle ambiguity range and the delay ambiguity range, the angle of arrival and the time of arrival of each inseparable path by an optimal estimation algorithm.

5. The method of claim 4, wherein the number of the inseparable paths is calculated by a following formula:

$$C = Q/2;$$

where C denotes the number of the inseparable paths; and
Q denotes the number of the target points.

6. The method of claim 4, wherein the optimal estimation algorithm comprises a maximum likelihood estimation algorithm and/or a mathematical analytic equation algorithm.

7. The method of any one of claims 1 to 6, wherein the sensing signal comprises an Orthogonal Frequency Division Multiplexing signal or a Linear Frequency Modulation signal.

8. An electronic device, comprising:

one or more processors; and
a storage device having stored thereon one or more programs which, when executed by the one or more processors, cause the one or more processors to implement the method of any one of claims 1 to 7.

9. The electronic device of claim 8, wherein the electronic device comprises a multi-antenna receiver comprising a multi-antenna array, and each antenna oscillator of the multi-antenna array is configured to receive the sensing signal.

10. A computer readable medium having stored thereon a computer program which, when executed by a processor, implements the method of any one of claims 1 to 7.

FIG. 1

| |
|---|
| Determine a channel impulse response of each antenna oscillator in a multi-antenna array in receiving a sensing signal |

S110

| |
|---|
| Calculate a delay-angle of arrival spectrum according to the channel impulse response of each antenna oscillator in receiving the sensing signal |

S120

| |
|---|
| Divide and classify a path distribution area according to the delay-angle of arrival spectrum |

S130

| In the presence of a separable path in the path distribution area, determine a maximum angle value of the separable path as an angle of arrival of the separable path, and determine a maximum time value of the separable path as time of arrival of the separable path | In the presence of inseparable paths in the path distribution area, according to an angle ambiguity range and a delay ambiguity range of a graph including the inseparable paths, estimate an angle of arrival and time of arrival of each inseparable path in the graph of the inseparable paths |
|---|---|

S140

S150

FIG. 2

FIG. 3

Take an area where the number of graphs exceeds a first preset threshold as the path distribution area
S131

Perform image segmentation on the path distribution area according to ambiguity to obtain a plurality of segmented graphs
S132

If a segmented graph is a single-path ambiguity graph, determine a path corresponding to the single-path ambiguity graph as a separable path

S133

If a segmented graph is not a single-path ambiguity graph, determine that the graph is of inseparable paths

S134

FIG. 4

Determine the number of the inseparable paths according to the number of target points at a boundary of the graph including the inseparable paths
S151

Obtain, within the angle ambiguity range and the delay ambiguity range, the AOA and the TOA of each inseparable path by an optimal estimation algorithm
S152

FIG. 5

FIG. 6

FIG. FIG. 7

FIG. 8

Ambiguity range of inseparable paths

Derivative singularities

FIG. 9

103

102

I/O interface

Storage device

104

101

Processor

FIG. 10

Computer readable
medium

FIG. 11

| INTERNATIONAL SEARCH REPORT | International application No. |
|---|---|
| | **PCT/CN2023/122171** |

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC: H04W, H04L, G06F

Documentation searched other than minimum documentation to the extent that such documents are included in the fields searched

DWPI; WPABS; CNTXT; CNKI; ENTXT; 3GPP: 时延, 延时, 到达, 接收, 角, 谱, 图, 坐标, 可分离, delay, arrival, receiv+, angle, TOA, AOA, spectrum, chart, coordinate, separable

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022166477 A1 (PURPLE MOUNTAIN LABORATORIES) 11 August 2022 (2022-08-11)<br>entire document | 1-10 |
| A | CN 109375153 A (NORTHWESTERN POLYTECHNICAL UNIVERSITY) 22 February 2019 (2019-02-22)<br>entire document | 1-10 |
| A | WO 2022165872 A1 (CHONGQING UNIVERSITY OF POSTS AND TELECOMMUNICATIONS) 11 August 2022 (2022-08-11)<br>entire document | 1-10 |
| A | KR 20130034095 A (ELECTRONICS AND TELECOMMUNICATIONS RESEARCH INSTITUTE) 05 April 2013 (2013-04-05)<br>entire document | 1-10 |
| A | US 2017242092 A1 (APPLE INC.) 24 August 2017 (2017-08-24)<br>entire document | 1-10 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **08 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/122171**

| Patent document cited in search report | | | Publication date (day/month/year) | Patent family member(s) | | | Publication date (day/month/year) |
|---|---|---|---|---|---|---|---|
| WO | 2022166477 | A1 | 11 August 2022 | None | | | |
| CN | 109375153 | A | 22 February 2019 | None | | | |
| WO | 2022165872 | A1 | 11 August 2022 | None | | | |
| KR | 20130034095 | A | 05 April 2013 | None | | | |
| US | 2017242092 | A1 | 24 August 2017 | US | 10094902 | B2 | 09 October 2018 |
| | | | | WO | 2017147000 | A1 | 31 August 2017 |

Form PCT/ISA/210 (patent family annex) (July 2022)